Europäisches Patentamt

**European Patent Office** (11) Publication number: **0 163 500**

Office européen des brevets A2

(12) **EUROPEAN PATENT APPLICATION**

(21) Application number: **85303686.1**

(22) Date of filing: **24.05.85**

(51) Int. Cl.⁴: **B 60 T 17/22**
**G 01 F 23/70**

(30) Priority: **29.05.84 GB 8413635**

(43) Date of publication of application:
**04.12.85 Bulletin 85/49**

(84) Designated Contracting States:
**DE FR IT**

(71) Applicant: **LUCAS INDUSTRIES public limited company**
**Great King Street**
**Birmingham, B19 2XF West Midlands(GB)**

(72) Inventor: **Farr, Glyn Phillip Reginald**
**21 The Hamlet**
**Leek Wootton Warwickshire(GB)**

(74) Representative: **Spall, Christopher John et al,**
**BARKER, BRETTELL & DUNCAN 138 Hagley Road**
**Edgbaston Birmingham B16 9PW(GB)**

(54) Improvements in liquid level indicators for vehicle hydraulic systems.

㉗ A liquid level indicator (1) for a vehicle hydraulic system is mounted in a reservoir (2) and comprises a float-operated switch (5) which completes an electrical circuit when the liquid in the reservoir (2) is below a predetermined level to energise indicating means, and manually-operable means (10) for operating the switch to test the circuit. The switch (5) has a contact (6) carried by the float (7), upward movement of which is limited by retaining means (19), and contact (8) carried from the reservoir (2) by a member (20) movable relative to the reservoir (2). The manually-operable means (10) is an end cap (32) which in a rest position keeps the reservoir contact (8) stationary while the float contact (6) is movable. For testing, the end cap (32) is unscrewed, allowing the reservoir contact (8) to move into engagement with the float contact (6), which is held stationary by the retaining means (19). A seal (30) and spring (31) bias the member (20) away from the reservoir (2).

FIG.1.

IMPROVEMENTS IN LIQUID LEVEL INDICATORS
FOR VEHICLE HYDRAULIC SYSTEMS

This invention relates to liquid level indicators for vehicle hydraulic systems of the kind for mounting in a reservoir and comprising a float-operated electric switch having one contact carried by the float, and another contact carried from the reservoir, the contacts being closed to complete an electrical circuit when the liquid in the reservoir is below a predetermined level, indicating means energised by the circuit, and manually-operable means for closing the contacts to test the circuit.

G.B. 1 370 276 shows a liquid level indicator of the kind set forth for a vehicle braking system, in which the float contact is located on an upstanding stem of the float, and the reservoir contact is fixed, being carried by a closure cap for the reservoir. The cap includes a resilient rubber portion located above the stem, by means of which the stem can be depressed manually to test the circuit. This indicator has simple construction, but the resilient rubber portion is liable to perish, as it is open to the engine compartment, and may rupture if misused; and where the indicating means comprises a light on the vehicle dashboard it takes two people to test the circuit.

G.B. 1 584 258 shows another indicator of the kind set forth, in which the float contact is again located on a float stem, and the reservoir contact is fixed in the reservoir. The manually-operable means is an operating member, for example a screw-threaded closure cap for the reservoir, which is screwed down in order to depress the stem to test the circuit. This construction omits the resilient rubber portion, and enables the circuit to be tested by only one person, but it has the disdavantage that it is difficult to reposition the operating member accurately after the circuit has been tested. This may result in a poor seal between the cap and the reservoir, leading to contamination of the fluid in the reservoir.

According to our invention, a liquid level indicator of the kind set forth includes retaining means limiting upward movement of the float and has the reservoir contact movably mounted, the arrangement being such that in normal operation the manually-operable means is in a rest position in which reservoir contact is stationary and the float contact is movable to indicate the liquid level, and for testing the manually-operable means is moved into a test position allowing the reservoir contact to move into engagement with the float contact, which is held relatively stationary by the retaining means.

Testing is thus accomplished by moving the reservoir contact up rather than the float contact down, so that the rubber portion in the cap is no longer necessary. Further, this means that the manually-operable means is moved up, rather than down, into its test position, so it is easy to reposition it accurately after testing.

The reservoir contact is preferably provided on a member movable relative to the reservoir, and for normal operation the manually-operable means in its rest position retains the member stationary relative to the reservoir. Biassing means may also be provided for urging the member away from the reservoir when the manually-operable means is in its test position. Conveniently the biassing means comprises a compression spring and a seal for sealing between the indicator and the reservoir, but it may instead simply comprise the seal. The manually-operable means preferably comprises an end cap for the reservoir.

The retaining means preferably maintains the float in an uppermost retracted position when the liquid is above the predetermined level. The retaining means may comprise at least one abutment on means locating the float in the reservoir. The locating means conveniently comprises a tube projecting into the reservoir, the float being disposed in the tube.

For normal operation the end cap is screwed down into its rest position so that the member is retained stationary relative to the reservoir, and the biassing means is compressed, so that the seal seals between the indicator and the reservoir. The float is retained in its retracted position as long as the liquid is above the predetermined level, and is movable when the liquid falls below this level to energise the indicating means.

For testing, the end cap is unscrewed a given amount into its test position, allowing the biassing means to expand to urge the member away from the reservoir, while the float is retained in its retracted position. The reservoir contact is therefore urged into engagement with the float contact to energise the indicating means.

It will be noted that with this construction, where the indicating means comprises a light on the vehicle dashboard, only one person is needed to test the circuit, and the indicator also serves as an indication of whether the end cap is screwed down properly.

One embodiment of a liquid level indicator in accordance with our invention is illustrated in the accompanying drawings, in which:-

Figure 1 shows a section through the indicator in its normal inoperative position;

Figure 2 is similar to Figure 1, but shows the indicator in its indicating position; and

Figure 3 shows the indicator in its test position.

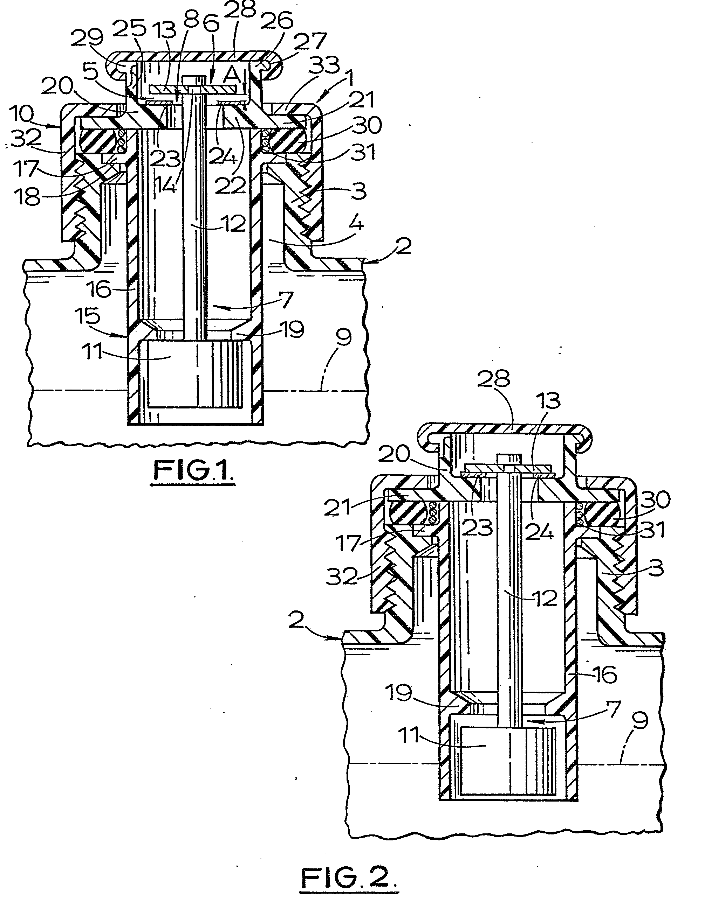

Figure 1 shows a liquid level indicator 1 for a vehicle hydraulic braking system, the indicator being mounted in a reservoir 2 for liquid. Only the neck portion 3 of an opening 4 of the reservoir 2 is shown, the indicator 1 being mounted in the opening 4.

The indicator comprises a float-operated electric switch 5 having one contact 6 carried by a float 7 and another contact 8 carried from the reservoir 2, the contacts 6, 8 being closed to complete an electrical circuit (not shown) when the liquid in the reservoir 2 falls below a predetermined level 9, an indicating means (not shown) energised by the circuit, and manually-operable means 10 for closing the contacts to test the circuit.

The float 7 comprises a body 11, an upstanding stem 12, and the float contact 6 in the form of a metal contact washer 13 which clips into a groove 14 near the top of the stem 12. The body 11 and stem 12 are of plastics material. The float 7 is mounted in a shield 15, which prevents movement of the liquid affecting the float 7. The shield 15 comprises a generally cylindrical plastics tube 16, extending into the reservoir. The tube 16 is provided, adjacent its upper end, with an external shoulder 17 which fits into an annular groove 18 provided on the upper surface of the neck portion 3 of the reservoir 2. The tube 16 is also provided with retaining means in the form of internal abutments 19 adjacent its lower end with which the float body 11 engages to limit its upward movement. The abutments 19 are operative to retain the float 7 in an uppermost retracted position provided that the liquid is above the predetermined level 9.

The reservoir contact 8 of the switch 5 is provided on a member 20 which is movable relative to the reservoir 2. The member 20 is of plastics material, and is of generally cylindrical outline. The lower end of the member 20 engages with upper end of the tube 16, and has an external shoulder 21, and an internally projecting flange 22 which carries on its upper surface two metallic contacts 23, 24 which form the reservoir contact 8. The washer 13 is disposed in the upper cylindrical portion 25 of the member 20, and this portion 25 terminates in an external lip 26, onto which a groove 27 of a closure member 28 clips. A breather channel 29 is also provided at the upper end of portion 25.

A seal 30 is provided between the reservoir neck 3 and the indicator 1. The seal 30 is a resilient rubber ring disposed round the upper end of the tube 16 between the shoulders 21 and 17, so that it contacts the lower face of the shoulder 21, and the upper faces of the shoulder 17 and the neck portion 3. A compression spring 31 is also mounted round the upper end of the tube 16, inside the seal 30. The seal 30 and the spring 31 form biassing means urging the member 20 away from the reservoir 2. The assembly is completed by the manually-operable means 10, which is an end cap 32 for the reservoir 2. The cap 32 has a screw-threaded engagement with the neck portion 3, and an annular flange 33, the lower face of which engages with the upper face of the shoulder 21. Thus when the end cap 32 is screwed home, into the rest position shown in Figure 1, it compresses the seal 30 and the spring 31, retaining the member 17 stationary relative to the reservoir 2. Compression of the seal 30 ensures that it provides an efficient seal between the reservoir 2 and the indicator 1.

Thus, when the indicator 1 is assembled on the reservoir 2 with the liquid above the predetermined level, as shown in Figure 1, the reservoir contact is stationary, and the float 7 is retained in its retracted position, with a distance A between the contacts.

If the liquid falls below the predetermined level the float 7 moves downwards, so that the contacts 13, 23, 24 engage to operate the switch 5 and energise the indicating means. This position is shown in Figure 2.

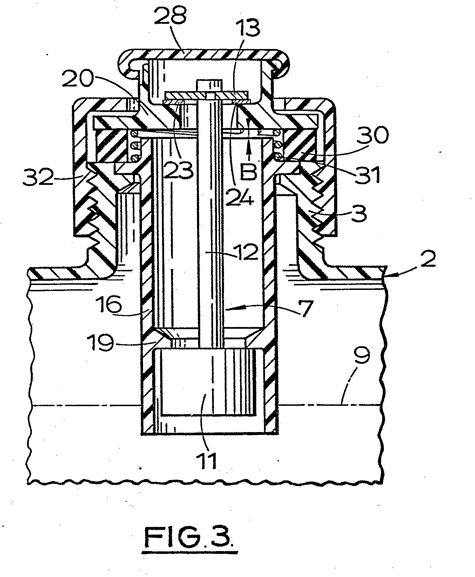

When it is desired to test the electrical circuit the end cap 32 is unscrewed a given amount, into the test position shown in Figure 3. This enables the biassing means - the seal 30 and the spring 31 - to expand, which urges the member 20 upwards, leaving a distance B between the member 20 and the tube 16, which remains stationary. The float 7 thus also remains stationary as it is held by the abutments 19. The arrangement is such that the distance B is greater than the distance A, so that the reservoir contacts 23, 24 engage with the washer 13 to operate the switch 5. The indicator remains in this position until the cap 32 is screwed down again.

It will be noted that the indicator 1 requires only one person to test it, even if the indicating means comprises a light on the vehicle dashboard, remote from the reservoir 2. Furthermore, the indicator 1 can also provide an indication that the cap 32 is not screwed on properly.

The indicator 1 described above is of simple construction, and also provides a sub-assembly which can easily be inserted in a reservoir 2. The sub-assembly comprises the tube 16 and member 20, which are assembled with the seal 30 and spring 31 between them, the float stem 12, body 11 and washer 13 then being inserted to keep them together. This sub-assembly can then be inserted in the reservoir neck, with the shoulder 17 of the tube 16 fitting in the groove 18 of the neck 3, and the cap 32 screwed on to compress the seal 30 and spring 31. Finally, the closure member 28 is clipped on.

In a modification (not shown) the spring 31 may be omitted. The seal 30 then provides the biassing force to urge the member 20 upwards in the test position.

In a further modification (not shown), the closure member 28 can be omitted, the end cap 32 being modified to provide the closure instead.

## CLAIMS

1. A liquid level indicator for a vehicle hydraulic system for mounting in a reservoir 2 and comprising a float-operated electric switch 5 having one contact 6 carried by the float 7, and another contact 8 carried from the reservoir 2, the contacts 6, 8 being closed to complete an electrical circuit when the liquid in the reservoir 2 is below a predetermined level, indicating means energised by the circuit, and manually-operable means 10 for closing the contacts to test the circuit, characterised in that the indicator 1 includes retaining means 19 limiting upward movement of the float 7, and the reservoir contact 8 is movably mounted, the arrangement being such that in normal operation the manually-operable means 10 is in a rest position in which the reservoir contact 8 is stationary and the float contact 6 is movable to indicate the liquid level, and for testing the manually-operable means 10 is moved into a test position allowing the reservoir contact 8 to move into engagement with the float contact 6, which is held relatively stationary by the retaining means 19.

2. A liquid level indicator according to claim 1, characterised in that the reservoir contact 8 is provided on a member 20 movable relative to the reservoir 2, and in normal operation the manually-operable means 10 in its rest position retains the member 20 stationary relative to the reservoir 2.

3. A liquid level indicator according to claim 2, characterised in that biassing means 30, 31 are provided for urging the member 20 away from .the reservoir 2 when the manually-operable means 10 is in its test position.

4. A liquid level indicator according to claim 3, characterised in that the biassing means comprises a compression spring 31 and a seal 30 for sealing between the indicator 1 and the reservoir 2.

5. A liquid level indicator according to claim 3, characterised in that the biassing means comprises a seal 30 for sealing between the indicator 1 and the reservoir 2.

6. A liquid level indicator according to any preceding claim, characterised in that the manually-operable means 10 comprises an end cap 32 for the reservoir 2.

7. A liquid level indicator according to any preceding claim, characterised in that the retaining means 19 maintains the float 7 in an uppermost retracted position when the liquid is above the predetermined level.

8. A liquid level indicator according to claim 7, characterised in that the retaining means comprises at least one abutment 19 on means 15 locating the float 7 in the reservoir 2.

9. A liquid level indicator according to claim 8, characterised in that the locating means 15 comprises a tube 16 projecting into the reservoir 2.

0163500

1/2

FIG.1.

FIG.2.

0163500

FIG.3.